# EUROPÄISCHE PATENTANMELDUNG

(11) **EP 2 236 815 A2**
(43) Veröffentlichungstag der Anmeldung: **06.10.2010**
(21) Anmeldenummer: 10000243.5
(22) Anmeldetag: 13.01.2010
(51) Int. Cl.: F03D 1/00, F03D 11/04

(54) **Seegebundes elektrisches Umspannwerk insbesondere für eine Windkraftanlage**

(30) Priorität: 26.03.2009 DE 102009014427
(71) Anmelder: AREVA Energietechnik GmbH, 01099 Dresden (DE)
(72) Erfinder: Zschoge, Florian, 01099 Dresden (DE); Hentschel, Gert, Dr., 01109 Dresden (DE); Zietz, Ronald, 01454 Radeberg (DE); Marburg, Dieter, 01187 Dresden (DE)
(74) Vertreter: Dreiss

(57) **Zusammenfassung**

Es wird ein seegebundenes elektrisches Umspannwerk (10) insbesondere für eine Windkraftanlage beschrieben, das mit elektrischen Komponenten, insbesondere mit einem Transformator (21), einem Leistungsschalter (23) und dergleichen, versehen ist, denen elektrische Energie zuführbar ist, und mit denen eine Hochspannung erzeugbar ist. Die elektrischen Komponenten des Umspannwerks (10) sind erfindungsgemäß im Innenraum eines schwimmfähigen Pontons (12) untergebracht.

## Beschreibung

Die Erfindung betrifft ein seegebundenes elektrisches Umspannwerk insbesondere für eine Windkraftanlage.

Bei der Gewinnung von elektrischer Energie kommen immer häufiger Windkraftanlagen zum Einsatz. Es sind sogenannte Off-Shore Windparks bekannt, bei denen in einem örtlichen Bereich des Meeres mehrere Windräder betrieben werden. Deren erzeugte Energie wird über ein Seekabel an ein gemeinsames Umspannwerk weitergegeben. Dort wird die elektrische Energie in eine erwünschte Hochspannung umgeformt und dann über ein weiteres Seekabel an einen land- oder seegebundenen Netzeinspeisungspunkt eines Energieversorgungsnetzes weitergegeben.

Das Umspannwerk ist üblicherweise in der näheren Umgebung der Windräder vorgesehen. Bei Off-Shore Windparks wird hierzu eine Arbeitsplattform im Meer aufgestellt, auf deren Oberfläche die elektrischen Komponenten des Umspannwerks, also beispielsweise Transformatoren, Schalter und dergleichen, angeordnet sind. Zum Schutz gegen das Meeresklima sind die Komponenten zumeist in Containern oder dergleichen untergebracht.

Zur Verwendung bei einem Umspannwerk ist es beispielsweise bekannt, die Arbeitsplattform mittels einer Gründungsstruktur, beispielsweise mittels einer Gitterkonstruktion oder eines sogenannten Monopile oder Tripod auf dem Meeresboden zu errichten. Die Gründungsstruktur wird an Land gefertigt und am erwünschten Standort mit Hilfe von Schiffskranen im Meer aufgestellt. Danach kann die Arbeitsplattform auf der Gründungsstruktur montiert werden.

Ein Nachteil eines derartigen Umspannwerks ergibt sich daraus, dass ein hoher Aufwand betrieben werden muss, um die elektrischen Komponenten gegen das harte Meeresklima, insbesondere gegen das aggressive Salzwasser zu schützen. Weiterhin ist die Errichtung der Gründungsstruktur und die Montage der Arbeitsplattform mit einem großen Aufwand verbunden.

Aufgabe der Erfindung ist es, ein seegebundenes elektrisches Umspannwerk zu schaffen, das im Hinblick auf die vorstehenden Nachteile verbessert ist.

Diese Aufgabe wird durch ein Umspannwerk nach dem Anspruch 1, durch einen schwimmfähigen Ponton nach dem Anspruch 2 sowie durch ein Verfahren zur Installation des Umspannwerks oder des Pontons nach dem Anspruch 11 gelöst.

Das seegebundene Umspannwerk ist mit elektrischen Komponenten versehen, insbesondere mit einem Transformator, einem Leistungsschalter und dergleichen, denen elektrische Energie zuführbar ist, und mit denen eine Hochspannung erzeugbar ist. Diese elektrischen Komponenten des Umspannwerks sind erfindungsgemäß im Innenraum eines schwimmfähigen Pontons untergebracht.

Durch die Anordnung der elektrischen Komponenten im Innenraum des Pontons wird der Vorteil erreicht, dass die Komponenten weitgehend von dem aggressiven Meeresklima verschont bleiben. Der Aufwand für den Korrosionsschutz der Komponenten kann damit vermindert werden. Ebenfalls kann durch eine Klimatisierung des Innenraums des Pontons eine weitere Verbesserung der Betriebsbedingungen für die elektrischen Komponenten des Umspannwerks erreicht werden. Dadurch ist es möglich, die Komponenten und ihre Zusammenschaltung weiter zu vereinfachen.

Weiterhin sind die elektrischen Komponenten des Umspannwerks bei jedem Wetter ohne weiteres zugänglich. Dies erleichtert den Betrieb und die Wartung der Komponenten.

Durch die Verwendung eines selbsterrichtenden Pontons wird der Vorteil erreicht, dass das gesamte Umspannwerk wesentlich kostengünstiger wird als mit den bekannten Gründungsstrukturen. Insbesondere ist bei der Installation des Pontons auf See kein Kran oder dergleichen erforderlich.

Die schwimmfähige Ausbildung des Pontons bringt den Vorteil mit sich, dass das Umspannwerk bereits an Land in den Innenraum des Pontons eingebaut werden kann. Dies erleichtert die Montage des Umspannwerks wesentlich und macht diese Montage auch wetterunabhängig. Dadurch wird auch die Montagezeit vermindert. Das fertig in den Ponton eingebaute Umspannwerk wird dann in einfacher Weise an den vorgesehenen Standort geschleppt und dort verankert. Auch der Aufwand für diesen Teil der Installation ist wesentlich einfacher und damit kostengünstiger als bisher.

Durch die Unterbringung des Umspannwerks im Innenraum des Pontons wird der weitere Vorteil erreicht, dass die Oberfläche des Pontons anderen Verwendungen zugeführt werden kann. So können dort beispielsweise Ersatzteile des Umspannwerks und gegebenenfalls auch der zugehörigen Energieerzeugungsanlagen gelagert werden, die bisher im Bedarfsfalle immer von Land angeliefert werden mussten. Damit kann die Reaktionszeit auf eine Betriebsstörung wesentlich vermindert und damit eine weitere Kosteneinsparung erreicht werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

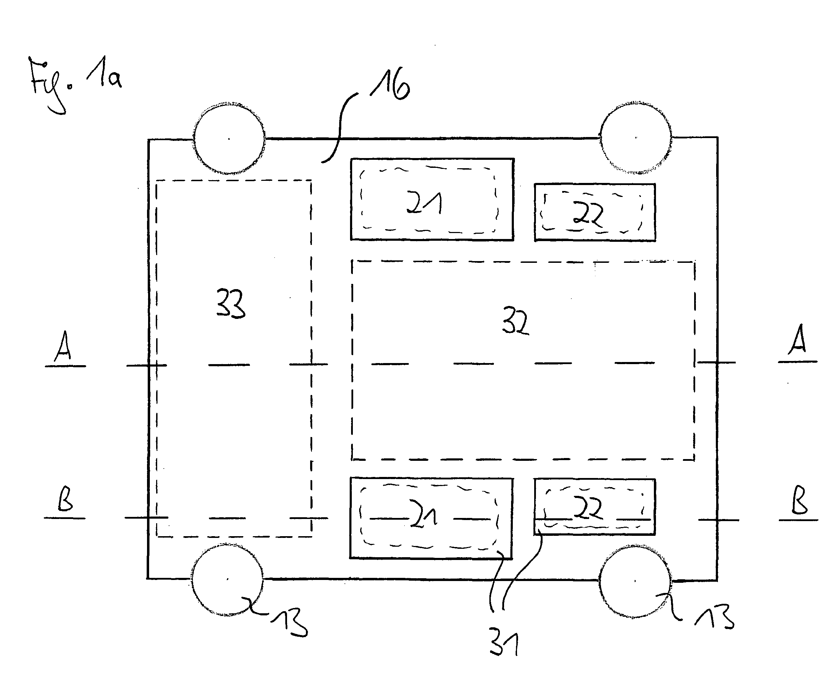

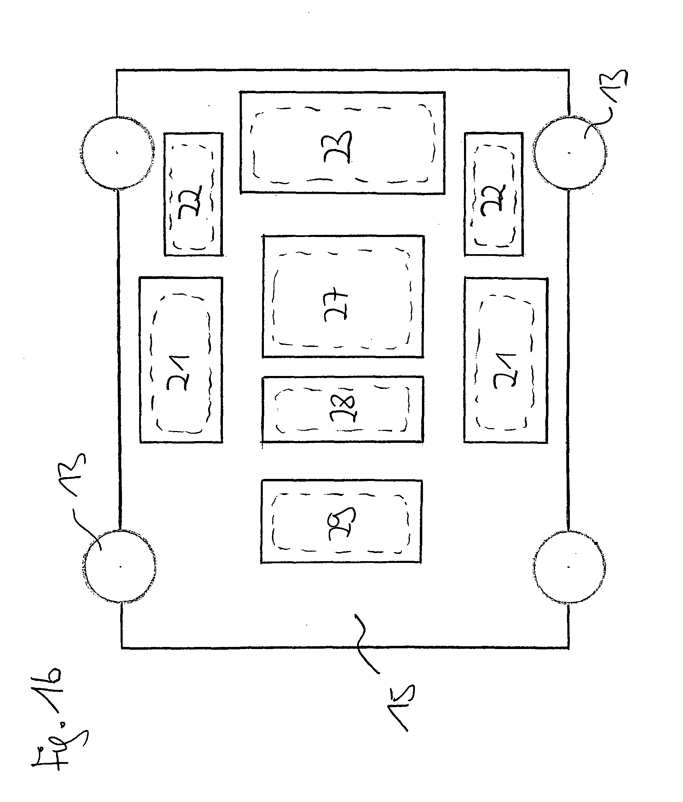

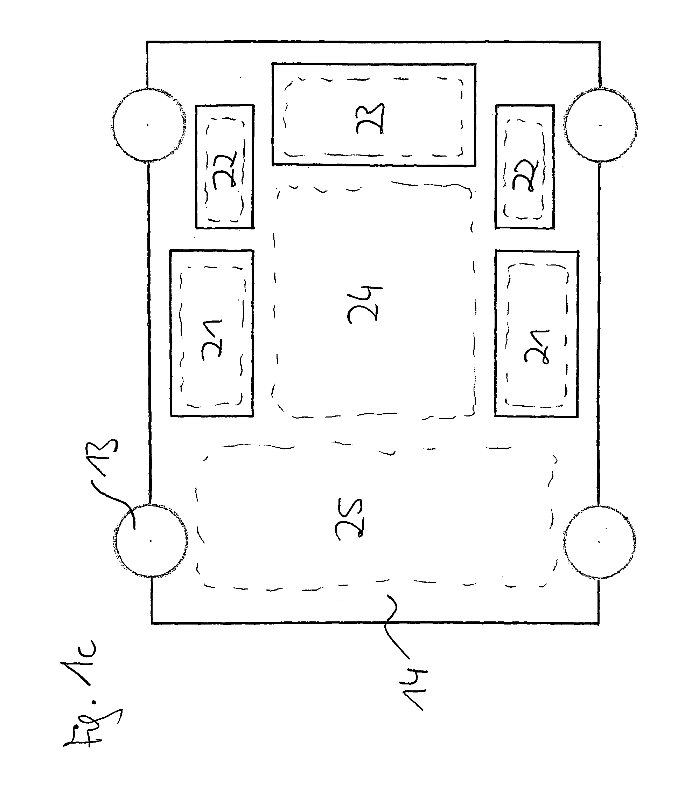

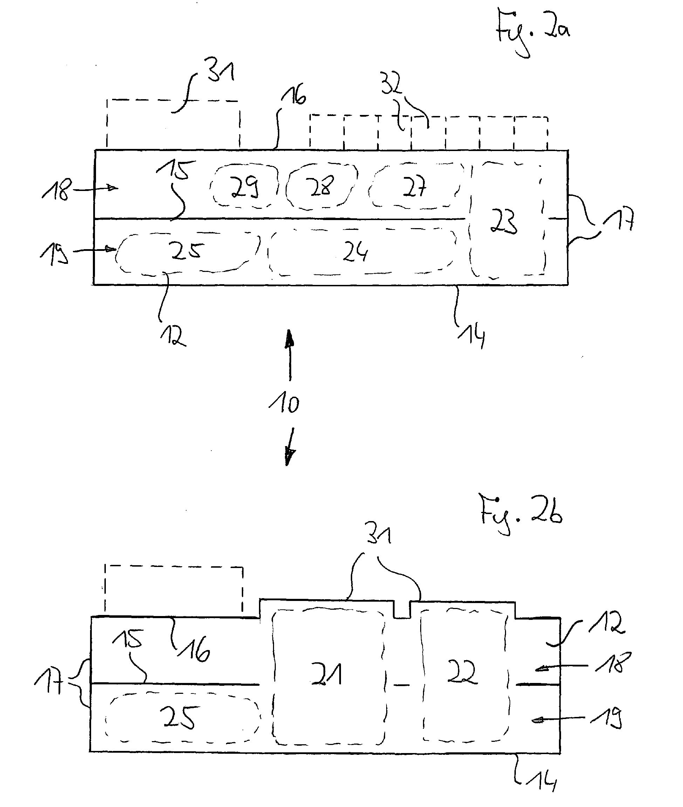

Die Figuren 1a, 1b, 1c zeigen schematische Draufsichten auf ein Ausführungsbeispiel eines erfindungsgemäßen seegebundenen elektrischen Umspannwerks und die Figuren 2a, 2b zeigen schematische Querschnitte des Umspannwerks der Figuren 1a, 1b, 1c entlang der Linien A, B der Figur 1a.

In den Figuren ist ein Umspannwerk 10 dargestellt, das vorzugsweise im Zusammenhang mit einer Windkraftanlage zum Einsatz kommt, die im Meer oder in einem See aufgestellt ist. Beispielsweise kann ein sogenannter Off-Shore Windpark vorhanden sein, dessen mehrere Windkraftanlagen die jeweils erzeugte Energie über Seekabel an das Umspannwerk 10 liefern. Die zugeführte elektrische Energie wird von dem Umspannwerk 10 in eine erwünschte Hochspannung umgewandelt und über weitere Seekabel in ein land- oder seegebundenes Energieversorgungsnetz eingespeist.

Es wird nachfolgend davon ausgegangen, dass das in den Figuren gezeigte Umspannwerk 10 mit mindestens einem Seekabel verbunden ist, über das elektrische Energie dem Umspannwerk 10 zugeführt wird, sowie mit mindestens einem weiteren Seekabel, über das die genannte Hochspannung an das Energieversorgungsnetz weitergegeben wird. Die genannten Seekabel sind in den Figuren nicht dargestellt.

Das Umspannwerk 10 ist im Innenraum eines schwimmfähigen Pontons 12 untergebracht.

Ein derartiger Ponton ist als solcher bekannt und kommt bei der Rohölgewinnung zum Einsatz. So ist beispielsweise in der EP 959 182 B1 eine Bohrplattform beschrieben, bei der ein Bohrturm und ein Arbeitskran auf der Oberfläche der Bohrplattform aufgestellt sind. Die Bohrplattform ist Bestandteil eines schwimmfähigen Pontons, der mittels einer Mehrzahl von Säulen auf dem Meeresboden errichtet ist. Zur Installation der Plattform wird der Ponton mit angehobenen Säulen zu seinem Standort geschleppt. Am Standort werden die Säulen auf den Meeresboden abgesenkt und die Bohrplattform damit aufgestellt.

Im Gegensatz zu der bekannten Bohrplattform, bei der die Bohreinrichtungen auf der Oberfläche der Bohrplattform und damit des Pontons aufgestellt sind, sind vorliegend die elektrischen Komponenten des Umspannwerks 10 im Innenraum des Pontons 12 untergebracht. Dies wird nachfolgend anhand der Figuren 1a, 1b, 1c, 2a, 2b näher erläutert.

Der Ponton 12 ist etwa quaderförmig ausgebildet und hat beispielsweise eine Länge von etwa 35 bis 45 Metern, eine Breite von etwa 25 bis 35 Metern und eine Höhe von etwa 6 bis 8 Metern. Der Ponton 12 weist vier Säulen 13 auf, mit denen der Ponton 12 auf dem Meeresboden aufgestellt werden kann.

Der Ponton 12 weist einen Boden 14, eine Zwischendecke 15 und eine Plattform 16 auf, die von Außenwänden 17 umgeben sind. Der Ponton 12 bildet eine schwimmfähige Wanne. Der Innenraum des Pontons 12 ist für Seewasser im wesentlichen nicht zugänglich.

Es versteht sich, dass der Ponton 12 auch eine andere Querschnittsform haben kann. Beispielsweise kann der Ponton 12 auch dreieckförmig oder im wesentlichen rund ausgebildet sein. Weiter versteht es sich, dass der Ponton 12 auch mehrere Zwischendecken oder gar keine Zwischendecke aufweisen kann, so dass also nur eine oder mehr als zwei Ebenen vorhanden sind.

Der Boden 14, die Zwischenwand 15 und die Plattform 16 sind etwa parallel zueinander angeordnet, während die Außenwände 17 hierzu etwa senkrecht ausgerichtet sind. Der Boden 14, die Zwischendecke 15 und die Plattform 16 sind mittels nicht dargestellter, etwa senkrecht ausgerichteter Stützen oder dergleichen zueinander befestigt, so dass insgesamt ein formstabiles Gebilde entsteht. Die Ausgestaltung und Dimensionierung des Bodens 14, der Zwischendecke 15, der Plattform 16, der Außenwände 17 und der sonstigen Stützen und dergleichen ist derart gewählt, dass auch schwere elektrische Komponenten des Umspannwerks 10 im Innenraum des Pontons 12 aufgenommen werden können.

Die Zwischendecke 15 unterteilt den Innenraum des Pontons in eine obere Ebene 18 und eine in etwa vertikaler Richtung darunter liegende untere Ebene 19. Jede der Ebenen weist eine Höhe von etwa 3 bis 4 Metern auf. Wie bereits erwähnt, ist die Zwischendecke 15 mit Hilfe von Stützen und dergleichen abgestützt und damit tragfähig. Wie ebenfalls bereits erwähnt, sind diese Stützen in den Figuren nicht dargestellt. Nur aufgrund dieser fehlenden Stützen scheint die Zwischendecke 15 in den schematischen Querschnitten der Figuren 2a, 2b zu schweben.

Die untere Ebene 19 baut auf dem Boden 14 auf und ist in der Draufsicht der Figur 1c sowie in den Querschnitten der Figuren 2a, 2b dargestellt. Auf dem Boden 14 sind beispielhaft zwei Transformatoren 21, insbesondere zwei Hermetik-Transformatoren, sowie zwei Drosseln 22, insbesondere zwei Kompensationsdrosseln, abgestellt. Weiterhin sind auf dem Boden 14 Leistungsschalter 23, insbesondere gasisolierte Leistungsschalter, aufgestellt. Die vorgenannten elektrischen Komponenten sind - wie in der Figur 1c gezeigt - am Außenrand des Bodens 14 im wesentlichen symmetrisch zueinander angeordnet.

Der Bereich 24 zwischen den Transformatoren 21 und den Drosseln 22 wird in der unteren Ebene 19 dazu verwendet, elektrische Kabel unterzubringen. Der übrige Bereich 25 in der unteren Ebene 19 ist nicht von elektrischen Komponenten des Umspannwerks 10 belegt und kann anderweitig verwendet werden.

Die Transformatoren 21, die Drosseln 22 und die Leistungsschalter 23 erstrecken sich hinsichtlich ihrer Höhe über beide Ebenen 18, 19. Die Transformatoren 21, die Drosseln 22 und die Leistungsschalter 23 sind deshalb auch in der oberen Ebene 18 des Pontons 12 vorhanden.

Die obere Ebene 18 baut auf der Zwischendecke 15 auf und ist in der Draufsicht der Figur 1b sowie in den Querschnitten der Figuren 2a, 2b dargestellt. Die Zwischendecke 15 weist Öffnungen auf, durch die sich - wie erwähnt - die Transformatoren 21, die Drosseln 22 und die Leistungsschalter 23 von der unteren Ebene 19 in die obere Ebene 18 erstrecken. Weiterhin sind auf der Zwischendecke 15 weitere Leistungsschalter 27 und weitere Drosseln 28 aufgestellt, und zwar in dem Bereich zwischen den Öffnungen für die Transformatoren 21, die Drosseln 22 und die Leistungsschalter 23.

In der oberen Ebene 18 ist ein Schaltraum untergebracht, der mehrere Schaltschränke 29 enthält, über die die Transformatoren 21, die Drosseln 22, 28 und die Leistungsschalter 23, 27 von Betriebspersonal überwachbar und bedienbar sind. Der übrige Bereich in der oberen Ebene 18 ist nicht von elektrischen Komponenten des Umspannwerks 10 belegt und kann anderweitig verwendet werden.

Die Transformatoren 21 und die Drosseln 22 erstrecken sich hinsichtlich ihrer Höhe über die beiden Ebenen 18, 19 hinaus. Die Transformatoren 21 und die Drosseln 22 stehen deshalb über die Plattform 16 über. In der Plattform 16 sind hierzu Öffnungen enthalten. Die Transformatoren 21 und die Drosseln 22 sind oberhalb der Plattform 16 mit Hilfe von Deckeln 31 verschlossen. Es versteht sich, dass auf die Öffnungen in der Plattform 16 verzichtet werden kann, sofern die Höhe der Transformatoren 21 und Drosseln 22 dies zulässt, sofern sich die Transformatoren 21 und Drosseln 22 also vollständig in der unteren und oberen Ebene 18, 19 unterbringen lassen.

Die Plattform 16 ist in der Draufsicht der Figur 1a sowie in den Querschnitten 2a, 2b dargestellt. Die Plattform 16 bildet die Decke der oberen Ebene 18 und stellt die Oberfläche des Pontons 12 dar. Der Bereich zwischen den Transformatoren 21 und Drosseln 22 ist auf der Oberfläche der Plattform 16 als Abstellfläche vorgesehen. Beispielsweise können dort Container 32 abgestellt werden, in denen Betriebs- und/oder Ersatzteile für das Umspannwerk 10 und gegebenenfalls auch für die zugehörige/n Windkraftanlage/n gelagert werden. Ebenfalls ist es möglich, dass die Plattform 16 als Hubschrauber-Landeplatz verwendet wird, so dass hierzu keine zusätzliche Plattform erforderlich ist. Weiterhin kann auf der Oberfläche der Plattform ein Bereich vorgesehen sein, auf dem Wohn-Container 33 oder dergleichen für das Betriebspersonal des Umspannwerks 10 aufgestellt werden können.

Im Betrieb des Umspannwerks wird mit Hilfe der Drosseln 28 eine Kompensation der von dem/den Windkraftanlage/n kommenden Seekabel vorgenommen. Mit Hilfe der Leistungsschalter 27 kann die Zuführung der elektrischen Energie über diese Seekabel unterbrochen werden, sofern notwendig. Die dem Umspannwerk 10 über die Seekabel zugeführte elektrische Energie wird von dem Transformator 21 in die erwünschte Hochspannung umgeformt. Dem Transformator 21 sind die Leistungsschalter 23 nachgeordnet, um die erzeugte Hochspannung, sofern erforderlich, abschalten zu können. Mit Hilfe der Drosseln 22 wird eine Kompensation der zu dem land- oder seegebundenen Energieversorgungsnetz führenden Seekabel vorgenommen.

Wie erwähnt, werden die elektrischen Kabel vorzugsweise in dem Bereich 24 der unteren Ebene 19 geführt. Die Seekabel können beispielsweise über die Säulen 13 den elektrischen Komponenten des Umspannwerks 10 zugeführt werden.

Aufgrund der im wesentlichen wasserdichten Ausgestaltung des Pontons 12 sind die elektrischen Komponenten des Umspannwerks 10 weitestgehend gegen Salzwasser und dergleichen geschützt. Weiterhin kann der Innenraum des Pontons 12 klimatisiert werden.

Die Montage des Umspannwerks 10 erfolgt an Land. Dort können die beschriebenen elektrischen Komponenten des Umspannwerks 10 in den Innenraum des Pontons 12 eingebaut werden. Ebenfalls können an Land bereits Funktionstests und dergleichen durchgeführt werden. Der fertiggestellte Ponton 12 mit dem darin enthaltenen Umspannwerk 10 wird dann mit Hilfe eines Schiffes an den vorgesehenen Standort geschleppt. Dort wird der Ponton 12 durch ein Ausfahren der Säulen 13 fest auf dem Meeresboden aufgestellt und verankert. Ein Kran ist hierzu nicht erforderlich. Auf See ist es dann nur noch erforderlich, die Seekabel anzuschließen und das Umspannwerk 10 in Betrieb zu nehmen.

Es versteht sich, dass die Dimensionierung des Pontons 12 derart vorgenommen werden muss, dass der Ponton 12 auch mit den in seinem Innenraum untergebrachten elektrischen Komponenten des Umspannwerks 10 noch schwimmfähig ist. Dies stellt jedoch bei den beispielhaft angegebenen Längen-, Breiten- und Höhenmaßen des Pontons 12 üblicherweise kein Problem dar.

Es versteht sich, dass das beschriebene Umspannwerk 10 auch dann einsetzbar ist, wenn die Windkraftanlage, also insbesondere das energieerzeugende Windrad, direkt auf der Plattform 16 des Pontons 12 aufgebaut ist. Ebenfalls versteht es sich, dass das Umspannwerk 10 auch bei anderen Energieerzeugungsanlagen eingesetzt werden kann, beispielsweise bei Wellenkraftwerken oder ähnlichen wassergebundenen Anlagen.

## Patentansprüche

1. Seegebundenes elektrisches Umspannwerk (10) mit elektrischen Komponenten, insbesondere mit einem Transformator (21), einem Leistungsschalter (23) und dergleichen, denen elektrische Energie zuführbar ist, und mit denen eine Hochspannung erzeugbar ist, **dadurch gekennzeichnet, dass** die elektrischen Komponenten des Umspannwerks (10) im Innenraum eines schwimmfähigen Pontons (12) untergebracht sind.

2. Schwimmfähiger Ponton (12), **dadurch gekennzeichnet, dass** im Innenraum des Pontons (12) elektrische Komponenten, insbesondere ein Transformator (21), ein Leistungsschalter (23) und dergleichen, eines seegebundenen elektrisches Umspannwerks (10) untergebracht sind, wobei den elektrischen Komponenten elektrische Energie zuführbar ist, und wobei von den Komponenten eine Hochspannung erzeugbar ist.

3. Umspannwerk (10) oder Ponton (12) nach einem der Ansprüche 1 oder 2, wobei der Ponton (12) eine schwimmfähige Wanne bildet und vorzugsweise im wesentlichen quaderförmig ausgebildet ist.

4. Umspannwerk (10) oder Ponton (12) nach einem der Ansprüche 1 bis 3, wobei der Ponton (12) mit Säulen (13) versehen ist, mit denen er auf dem Meeresboden steht.

5. Umspannwerk (10) oder Ponton (12) nach einem der Ansprüche 1 bis 4, wobei der Ponton (12) im wesentlichen wasserdicht ausgebildet ist.

6. Umspannwerk (10) oder Ponton (12) nach einem der Ansprüche 1 bis 5, wobei der Ponton (12) mindestens zwei übereinander angeordnete Ebenen (18, 19) aufweist.

7. Umspannwerk (10) oder Ponton (12) nach Anspruch 6, wobei einzelne der elektrischen Komponenten des Umspannwerks (10) sich über mehrere Ebenen (18, 19) erstrecken.

8. Umspannwerk (10) oder Ponton (12) nach einem der Ansprüche 6 oder 7, wobei ein Bereich (24) in einer der unteren Ebenen (19) zur Unterbringung von elektrischen Kabeln vorgesehen ist.

9. Umspannwerk (10) oder Ponton (12) nach einem der Ansprüche 6 bis 8, wobei in einer der oberen Ebenen (18) ein Schaltraum mit elektrischen Schaltschränken (29) zur Überwachung und/oder Bedienung der elektrischen Komponenten des Umspannwerks (10) vorgesehen ist.

10. Umspannwerk (10) oder Ponton (12) nach einem der vorstehenden Ansprüche, wobei die Oberfläche des Pontons (12) eine Plattform (16) bildet, auf der Betriebs- und/oder Ersatzteile lagerbar sind und/oder die als Hubschrauber-Landeplatz verwendbar ist.

11. Verfahren zur Installation des Umspannwerks (10) oder des Pontons (12) nach einem der vorstehenden Ansprüche, **dadurch gekennzeichnet, dass** die elektrischen Komponenten des Umspannwerks (10) an Land in den Ponton (12) eingebaut werden, dass der Ponton (12) mit dem eingebauten Umspannwerk (10) an den vorgesehenen Standort gebracht wird, und dass dort das Umspannwerk (10) in Betrieb genommen wird.

12. Verfahren nach Anspruch 11, wobei das Umspannwerk (10) über Seekabel an ein land- oder seegebundenes Energieversorgungsnetz angeschlossen wird.

13. Verfahren nach einem der Ansprüche 11 oder 12, wobei das Umspannwerk (10) über Seekabel an eine seegebundene Energieerzeugungsanlage angeschlossen wird.
